# EUROPÄISCHE PATENTSCHRIFT

(11) **EP 3 691 827 B1**
(45) Veröffentlichungstag und Bekanntmachung des Hinweises auf die Patenterteilung: **08.09.2021**
(21) Anmeldenummer: 18749286.3
(22) Anmeldetag: 19.07.2018
(51) Int. Cl.: B23K 20/12

(54) **VERFAHREN ZUM VERBINDEN FLÄCHIGER BAUTEILE SOWIE VERBUNDELEMENT**
METHOD FOR CONNECTING FLAT COMPONENTS AND COMPOUND ELEMENT
PROCÉDÉ DE CONNEXION DE COMPOSANTS PLATS ET ÉLÉMENT COMPOSÉ

(30) Priorität: 02.10.2017 AT 508372017
(43) Veröffentlichungstag der Anmeldung: 12.08.2020
(73) Patentinhaber: Stirtec GmbH, 8141 Premstätten (AT)
(72) Erfinder: KALLEE, Stephan Walter Klaus Werner, 63826 Geiselbach (DE)
(74) Vertreter: Wirnsberger & Lerchbaum Patentanwälte OG
(86) Internationale Anmeldenummer: PCT/AT2018/060154
(87) Internationale Veröffentlichungsnummer: WO 2019/068119

(56) Entgegenhaltungen:
- WO-A1-2015/053258
- DE-A1-102005 030 800
- DE-A1-102005 060 178
- DE-U1-202010 005 378
- US-A1- 2006 260 376
- US-A1- 2008 237 305
- US-A1- 2009 120 995
- US-A1- 2013 327 813

## Beschreibung

Die Erfindung betrifft ein Verfahren zum Verbinden flächiger Bauteile.

Weiter betrifft die Erfindung ein Verbundelement, aufweisend zumindest zwei flächige, verbundene Bauteile.

Aus dem Stand der Technik sind verschiedene Verfahren und Verbundelemente der eingangs genannten Art bekannt geworden. Beispielsweise werden dickwandige Bimetallrohre häufig in einem Schmelzschweißverfahren verbunden, insbesondere mit Metall-Inertgasschweißen oder Wolfram-Inertgasschweißen. Wird dabei in einer sogenannten Schwarz-Weiß-Verbindung ein Rohr aus Baustahl bzw. einem niedrig- bis unlegierten Stahl mit einem aus Edelstahl bestehenden Rohr verbunden, beispielsweise um über das aus Baustahl bestehende Rohr eine hohe Festigkeit und über das aus Edelstahl bestehende Rohr eine hohe Korrosionsbeständigkeit zu erreichen, ist bei Herstellen einer Wurzellage höchste Sorgfalt anzuwenden, sodass der Baustahl nicht den Edelstahl verunreinigt. Insbesondere ein sogenanntes Orbitalschweißen von einer Bimetall-Rohrleitung ist bisher nur mit sehr hohem Aufwand möglich. DE 20 2010 005378 U1 offenbart ein Verfahren nach dem Oberbegriff von Anspruch 1.

Hier setzt die Erfindung an. Aufgabe der Erfindung ist es, ein Verfahren in der eingangs genannten Art anzugeben, mit welchem auch ein Verbinden flächiger Bauteile unterschiedlicher Materialeigenschaften auf einfache Weise möglich ist. Insbesondere soll das Verfahren zum einfachen Herstellen sogenannter Schwarz-Weiß-Verbindungen sowie zum Herstellen oder Verbinden von längsnahtgeschweißten oder spiralnahtgeschweißten Bimetallrohren oder mehrlagigen Rohren geeignet sein.

Ferner soll ein Verbundelement der eingangs genannten Art angegeben werden, welches einfach herstellbar ist.

Die erste Aufgabe wird erfindungsgemäß durch ein Verfahren nach Anspruch 1 gelöst, wobei die Bauteile flächig aneinander positioniert werden, wobei Seitenflächen der Bauteile zumindest teilweise fluchtend angeordnet werden, wonach die Bauteile an zumindest einem Teil der fluchtenden Seitenflächen mittels Rührreibschweißen verbunden werden.

Im Rahmen der Erfindung wurde erkannt, dass flächige Bauteile unterschiedlichster Materialeigenschaften dann auf einfache Weise und mit guten Eigenschaften einer erhaltenen Verbindung verbunden werden können, wenn die Bauteile flächig mittelbar oder unmittelbar aneinander positioniert, üblicherweise aufeinander gelegt, werden, wonach an zumindest einer fluchtenden Seitenfläche der Bauteile eine Rührreibschweißverbindung hergestellt wird. Als flächig aneinander positioniert wird hierbei verstanden, dass die in der Regel plattenförmigen bzw. quaderförmigen Bauteile mittelbar oder unmittelbar über die Seitenfläche verbunden sind, welche relativ zu den weiteren Seitenflächen die größte Ausdehnung bzw. eine maximale Oberfläche aufweist. Diese Seite der flächigen Bauteile wird hier auch als flächige Seite bezeichnet. Die Rührreibschweißverbindung kann dabei die Bauteile unmittelbar verbinden. Ergänzend ist ein Verbindungsteil vorgesehen, welches sämtliche flächigen Bauteile an den fluchtenden Endflächen berührt und an den fluchtenden Endflächen mit den einzelnen Bauteilen durch eine Rührreibschweißverbindung verbunden wird, sodass die Bauteile mittelbar über einer Rührreibschweißverbindung verbunden werden. Dadurch ergibt sich auch bei einer sogenannten Schwarz-Weiß-Verbindung bzw. bei einer Verbindung von Baustahl mit Edelstahl eine sehr hochwertige Verbindung, zumal ein Wärmeeinfluss gegenüber einem Schmelzschweißverfahren deutlich reduziert ist. Somit werden auch sprödbrüchige intermetallische Phasen vermieden, weil beim Rührreibschweißen in einem Temperaturbereich unterhalb eines Schmelzpunktes der Metalle gearbeitet wird.

Beim Rührreibschweißen wird eine Reibenergie zum Verbinden der Bauteile durch ein verschleißfestes rotierendes Werkzeug erzeugt. Üblicherweise wird die Rührreibschweißverbindung hergestellt, indem das Rührreibschweißwerkzeug um eine Achse rotiert wird, welche senkrecht zur flächigen Seite der flächigen Bauteile ausgerichtet ist und entlang der fluchtenden Seitenflächen in einer Vorschubrichtung verfahren wird.

Erfindungsgemäß wird ein Verbindungsteil an fluchtenden Endflächen der fluchtenden Seitenflächen angeordnet, wonach das Verbindungsteil mittels Rührreibschweißen mit den Bauteilen verbunden wird. Dadurch kann auf einfache Weise ein aus Metallen unterschiedlicher Eigenschaften bestehendes Verbundelement gebildet werden, welches endseitig ein Verbindungsteil aufweist, welches aus einem homogenen Material bestehen kann. Somit können mehrere solcher Verbundelemente in einem herkömmlichen Verfahren verbunden werden. Das Verbindungsteil ragt somit üblicherweise über die einzelnen Schichten der flächigen Bauteile bzw. überlappt diese, sodass die flächigen Bauteile endseitig mit dem Verbindungsteil über einen Überlappstoß verbunden sind. Somit können flächige Bauteile unterschiedlicher Materialeigenschaften in einem Stumpf- und Überlappstoß zu mehrlagigen Bauteilen bzw. mehrlagigen Blechen oder längsnahtgeschweißten oder spiralnahtgeschweißten Rohren verbunden werden. Die flächigen Bauteile sind somit an den fluchtenden Seitenflächen unmittelbar über eine Rührreibschweißverbindung und/oder an den fluchtenden Endflächen mittelbar über das Verbindungsteil verbunden, wobei das Verbindungsteil wiederum über Rührreibschweißverbindungen mit den flächigen Bauteilen verbunden ist. Üblicherweise sind die Endflächen senkrecht zu den Seitenflächen angeordnet und sind die Seitenflächen und die Endflächen senkrecht zu den flächigen Seiten der Bauteile orientiert.

Die flächigen Bauteile können mit dem Verbindungsteil in einem einzigen Arbeitsschritt oder auch gesondert mittels Rührreibschweißen verbunden werden. Ein besonders effizientes Verfahren wird erreicht, wenn die einzelnen flächigen Bauteile untereinander und das endseitig angeordnete Verbindungsteil mit den flächigen Bauteilen in einem einzigen Arbeitsgang mittels Rührreibschweißen verbunden werden, indem das Rührreibschweißwerkzeug entlang einer Vorschubrichtung an den Seitenflächen entlang bis zum Verbindungsteil verfahren wird. Hierzu schließt das Verbindungsteil üblicherweise bündig mit den Seitenflächen ab.

Zur Herstellung großer Verbundelemente aus Metallen unterschiedlicher Materialeigenschaften ist es vorteilhaft, wenn mehrere gebildete Verbundelemente an den Verbindungsteilen verschweißt werden, insbesondere mit einem Schmelzschweißverfahren. Auf diese Weise können vorab, beispielsweise in einer industriellen Fertigung, hergestellte Verbundelemente auf einfache Weise auf einer Baustelle zu großen Bauteilen, insbesondere Pipelinerohren, verbunden werden, wobei herkömmliche Verfahren eingesetzt werden können. Alternativ können vorgefertigte Verbundelemente natürlich auch mit einem Rührreibschweißverfahren auf der Baustelle verbunden werden.

Um kostengünstige Verbundelemente mit vorteilhaften Eigenschaften zu erreichen, ist üblicherweise vorgesehen, dass die Bauteile aus Metallen unterschiedlicher Eigenschaften bestehen. Beispielsweise kann auf diese Weise ein kostengünstiges Rohr zum Transport von korrosiven Medien unter Druck auf einfache Weise dadurch hergestellt werden, dass ein innenseitiges korrosionsbeständiges Edelstahlrohr mit einem außenseitigen Baustahlrohr verbunden wird, welches eine zur Erreichung einer gewünschten Festigkeit erforderliche Wandstärke aufweisen kann. Dadurch ist es nicht mehr wie im Stand der Technik erforderlich, einen gesamten zur Erreichung einer mechanischen Festigkeit erforderlichen Rohrquerschnitt aus dem korrosionsbeständigen und teuren Edelstahl auszubilden.

Zur Erreichung vorteilhafter und gleichzeitig kostengünstiger Verbundelemente hat es sich bewährt, dass Bauteile eingesetzt werden, welche zumindest teilweise aus Strukturbaustahl, korrosionsfestem Stahl, rostfreiem Edelstahl, Bor-haltigem Stahl, Tantal, Aluminium, Kupfer oder Titan bestehen. Mit Vorteil besteht jedes flächige Bauteil aus einem der vorstehend genannten Materialien und bestehen die einzelnen flächigen Bauteile aus unterschiedlichen Materialien. Dadurch können auf einfache Weise Verbundelemente mit vorteilhaften Eigenschaften auf kostengünstige Weise hergestellt werden.

Es hat sich bewährt, dass eine Schulter eines eingesetzten Rührreibschweißwerkzeuges beim Rührreibschweißen an einem obersten Bauteil anliegt, insbesondere an einer flächigen Seite des obersten flächigen Bauteiles. Das Rührreibschweißwerkzeug weist einen sogenannten Pin auf, welcher um eine Achse rotiert und mit welchem über ein Verrühren bzw. Verwirbeln der Werkstoffe eine Rührreibschweißverbindung hergestellt wird. Nachdem die Verbindung der Bauteile an fluchtenden Seitenflächen der Bauteile gebildet wird, kontaktiert der Pin die Bauteile somit üblicherweise nicht über einen vollen Umfang, sondern nur an einer Seite, an welcher der Pin in Kontakt mit dem fluchtenden Seitenflächen der Bauteile steht, und ist an einer den fluchtenden Seitenflächen gegenüberliegenden Seite frei. Die Achse, um welche das Rührreibschweißwerkzeug rotiert, schneidet die Bauteile somit in aller Regel nicht. Üblicherweise wird das Rührreibschweißwerkzeug senkrecht zu einer flächigen Seite der flächigen Bauteile auf das oberste flächige Bauteil gedrückt, wobei der Pin an den Seitenflächen rotiert, um die Bauteile zu verbinden.

Die Schulter kann grundsätzlich synchron mit dem Pin rotieren. Eine besonders hochwertige Verbindung kann jedoch erreicht werden, wenn die Schulter eine von einem Pin des Rührreibschweißwerkzeuges unterschiedliche Rotationsgeschwindigkeit aufweist. Dadurch wird der andernfalls beim Rührreibschweißen übliche Wulst an einer Oberfläche der zu verbindenden Bauteile minimiert oder vermieden.

Es kann auch vorgesehen sein, dass die Schulter keine Rotationsgeschwindigkeit um eine Achse des Pins aufweist, um eine besonders vorteilhafte Oberfläche zu erreichen. So kann dann ein bei einem Eindringen des Rührreibschweißwerkzeuges in den Werkstoff verdrängtes plastifiziertes Material unter der Schulter eingefangen und an einem Ende der Schweißnaht zum Füllen eines Endlochs verwendet werden.

Mit Vorteil ist vorgesehen, dass eine Schulter des Rührreibschweißwerkzeuges von einer Außenschulter umgeben ist, welche eine von einer Rotationsgeschwindigkeit des Pins abweichende Geschwindigkeit um die Achse aufweist. Es kann somit eine weitere Schulter vorgesehen sein, welche mit einer vom Pin unterschiedlichen Geschwindigkeit rotierend oder stehend ausgebildet ist und außerhalb einer mit dem Pin mitrotierenden Schulter des Rührreibschweißwerkzeuges positioniert ist. Verglichen mit einem Werkzeug ohne einer solchen Außenschulter mit rotierendem Pin und stehender Schulter wird somit eine reduzierte Breite eines Spaltes zwischen mit unterschiedlicher Geschwindigkeit rotierenden Elementen des Rührreibschweißwerkzeuges bzw. zwischen der stehenden Schulter und dem rotierenden Pin erreicht.

Mit einem erfindungsgemäßen Verfahren hergestellte flächige Verbundelemente bzw. hergestellte Bimetallbleche können zu Rohren gebogen werden. Beispielsweise kann somit in einem sogenannten U-O-Verfahren aus hergestellten Verbundelementen ein Rohr oder ein Tank geformt werden, wobei beispielsweise eine Längsnaht eines Rohres in einem Rührreibschweißverfahren gebildet werden kann.

Darüber hinaus können mit einem erfindungsgemäßen Verfahren auch ein längsnahtgeschweißtes Rohr oder ein spiralnahtgeschweißte Rohr hergestellt sowie längsnahtgeschweißte Rohre oder spiralnahtgeschweißte Rohre miteinander verbunden werden, um entsprechende Rohre auf kostengünstige Weise mit hoher Qualität herzustellen.

Eine Herstellung eines Rohres aus Metallen unterschiedlicher Materialeigenschaften wird auf besonders einfache Weise erreicht, wenn bei einem erfindungsgemäßen Verfahren rohrförmige Bauteile eingesetzt werden. Die fluchtenden Seitenflächen können dann beispielsweise senkrecht zu einer Längsachse der rohrförmigen Bauteile angeordnet sein und somit die Stirnseite des Rohres bilden. Die fluchtenden Seitenflächen können auch bei Herstellung eines Rohres im erfindungsgemäßen Verfahren mittelbar mittels Rührreibschweißen verbunden werden, beispielsweise indem ein sämtliche fluchtende Seitenflächen überlappendes Verbindungsteil an den Seitenflächen angeordnet wird, wonach das Verbindungsteil mit den einzelnen Bauteilen mittels Rührreibschweißen verbunden wird. Dadurch kann auf einfache Weise beispielsweise ein Bimetallrohr erreicht werden, welches endseitig ein Verbindungsteil aus einem homogenen Material aufweist, sodass einzelne gebildete Bimetallrohre wieder in einem konventionellen Verfahren verbunden werden können. Ein robustes Herstellungsverfahren ergibt sich, wenn die Bauteile über eine Übermaßpassung verbunden werden, wobei insbesondere ein inneres Bauteil abgekühlt und/oder ein äußeres Bauteil erhitzt werden, bevor die Bauteile flächig aneinander positioniert werden. Beispielsweise kann somit ein tiefgekühltes dünnwandiges Edelstahlrohr mit beispielsweise 300 mm Außendurchmesser in ein erhitztes dickwandiges Baustahlrohr mit 300 mm Innendurchmesser geschoben werden, wonach an fluchtende Enden der Rohre mit dem Rührreibschweißverfahren je ein Edelstahlrohr angeschweißt wird, welches den Innendurchmesser des Edelstahlrohres und den Außendurchmesser des Baustahlrohres aufweist. Das angeschweißte Edelstahlrohr weist in aller Regel eine geringe axiale Ausdehnung auf, sodass zwar eine Verbindung einzelner hergestellte Bimetallrohre in einem Schmelzschweißverfahren möglich ist, jedoch gleichzeitig Kosten reduziert sind.

Um eine besonders tragfähige Verbindung zu erreichen, ist es günstig, wenn ein Durchmesser der aus rohrförmigen Bauteilen hergestellten Verbundelemente nach dem Rührreibschweißen in einer Zieh- oder Rollwalzanlage modifiziert wird, sodass sich die Bleche untereinander verklammen bzw. wie bei einem Plattieren oder Walzplattieren verbinden.

Ein Tiefkühlen und ein Erhitzen der einzelnen Bauteile sind nicht erforderlich, wenn die Rohre mit einer Spielpassung so ineinander geschoben werden, dass diese an einem Überlappstoß mit dem Verbindungsteil verschweißt werden können. Alternativ können die mit einer Spielpassung ineinander geschobenen Rohre auch aneinander geschmiegt werden.

Zur Herstellung einer Verbindung der rohrförmigen Bauteile kann es günstig sein, wenn eine Rührreibschweißverbindung mit einer in einem innenliegenden, rohrförmigen Bauteil angeordneten Einrichtung hergestellt wird, insbesondere mit einem Rohrkrabbler. Die Rührreibschweißverbindung kann somit vollautomatisch von einem Inneren des Rohres aus gebildet werden. Darüber hinaus kann ein sogenanntes Bobbin-Werkzeug eingesetzt werden, bei welchem die Schultern von beiden Seiten auf die Bauteile gepresst werden. Somit können beispielsweise Gleitlagerwerkstoffe in tubulare Lagerbuchsen, Lagerschalen oder Kolben eingeschweißt werden.

Über die Verbindungsteile können unterschiedliche erfindungsgemäß hergestellte Verbundelemente aus rohrförmigen Bauteilen, insbesondere Bimetallrohre, untereinander auf einfache Weise verbunden werden. Zur Verbindung von bimetallischen Rohren unterschiedlicher Durchmesser können bimetallische konische Übergangsstücke ebenfalls hergestellt werden.

Da beim Rührreibschweißen nur ein geringer Wärmeeinfluss erreicht wird, können auch eine oder mehrere Fasermatten, Faserplatten oder faserverstärkte Platten zwischen den einzelnen Bauteilen angeordnet werden, um beispielsweise über Glas- oder Steinwollematten eine Wärmeisolierung oder über Aramidgewebe einen Explosionsschutz zu erreichen.

Es versteht sich, dass auch Rohre hergestellt werden können, welche aus mehr als zwei unterschiedlichen, flächigen Bauteilen bestehen, beispielsweise Trimetallrohre. In dem Zusammenhang hat es sich als vorteilhaft erwiesen, wenn drei Bauteile verbunden werden, wobei insbesondere ein erstes Bauteil aus rostfreiem Edelstahl, ein flächig mit dem ersten Bauteil verbundenes zweites Bauteil aus Bor-haltigem Stahl und ein flächig mit dem zweiten Bauteil verbundenes drittes Bauteil aus Baustahl hergestellt ist. Es wird somit ein Trimetallrohr erreicht, bei welchem eine innerste Lage aus rostfreiem Edelstahl, eine mittlere Lage aus Bor-haltigem Stahl und eine äußerste Lage aus kostengünstigem Baustahl gebildet ist, um ein korrosionsbeständiges und gleichzeitig kostengünstiges sowie hochfestes Rohr zu erreichen. Darüber hinaus können natürlich auch Rohre mit vier, fünf oder sechs Lagen bzw. flächigen Bauteilen ausgebildet sein.

Die weitere Aufgabe wird erfindungsgemäß durch ein Verbundelement nach Anspruch 12 gelöst, bei welchem die Bauteile flächig aneinander positioniert sind und fluchtende Seitenflächen der Bauteile über eine Rührreibschweißverbindung verbunden sind. Es versteht sich, dass bevorzugt ein erfindungsgemäßes Verfahren zur Herstellung eines solchen Verbundelementes eingesetzt wird. Die flächigen Bauteile sind dabei unmittelbar über eine Rührreibschweißverbindung verbunden sein. Ergänzend sind die Bauteile auch mittelbar über ein Verbindungselement verbunden, welches die Seitenflächen der flächigen Bauteile überlappt und über die Seitenflächen mit den flächigen Bauteilen verbunden ist, sodass die flächigen Bauteile über die Seitenflächen und das Verbindungsteil mittelbar mittels einer Rührreibschweißverbindung verbunden sind. Die flächigen Bauteile sind dann über einen Stumpf- und Überlappstoß miteinander verschweißt.

Es hat sich bewährt, dass ein erfindungsgemäßes Verbundelement als Rohr zum versprödungsarmen Transport radioaktiver Medien ausgebildet ist, welches insbesondere für ein Kernkraftwerk geeignet ist. Dies kann beispielsweise auf einfache Weise erreicht werden, wenn eine der Lagen des aus mehreren flächigen Bauteilen bestehenden Rohres aus einem Bor-haltigen Stahl hergestellt ist, welcher in einem radioaktiven Umfeld Neutronen auffängt. Ein entsprechendes Rohr kann beispielsweise in einem Kernkraftwerk, zum Transport oder zur Lagerung von nuklearem Abfall eingesetzt werden. Dadurch ist verglichen mit Rohrleitungen des Standes der Technik eine Versprödung minimiert bzw. ist eine Herstellung wesentlich kostengünstiger als von versprödungsarmen Rohrleitungen des Standes der Technik, bei welchen in der Regel ein gesamter Rohrquerschnitt aus entsprechendem Material gefertigt ist.

Ein erfindungsgemäß hergestelltes Verbundelement kann vorteilhaft auch als Münze oder Medaille ausgebildet sein. So wird durch das Rührreibschweißen mittels eines Profiles des Rührreibschweißwerkzeuges eine Mikrostruktur des Verbundelementes erreicht, welche fälschungssicher ist.

Darüber hinaus kann ein erfindungsgemäßes Verbundelement für verschiedenste weitere Zwecke eingesetzt werden, beispielsweise als Wärmetauscher, wobei üblicherweise außenseitig Kühlrippen angeordnet sind, um eine große Oberfläche zu erreichen.

Erfindungsgemäß hergestellte Verbundelemente, welche als Rohre bestehend aus flächigen Bauteilen unterschiedlicher Materialeigenschaften, insbesondere Bimetallrohre, hergestellt sind, können untereinander direkt oder über ein Verbindungsteil indirekt verbunden werden. Das Verbindungsteil kann beispielsweise als Edelstahlrohrende ausgebildet sein, sodass einzelne Rohre wieder in einem konventionellen Schweißverfahren verbunden werden können. Einzelne Lagen eines Bimetallrohres können an den Rohrenden auch unmittelbar, also ohne Verbindungsteil, verbunden werden. Eine Rührreibschweißverbindung wird dann üblicherweise hergestellt, indem die Schulter des Rührreibschweißwerkzeuges in Kontakt mit einer Stirnfläche des Rohres ist.

Zur Erreichung bestimmter Eigenschaften wie einer Wärmedämmung oder einem Explosionsschutz kann zwischen den Bauteilen eine Fasermatte, eine Faserplatte oder eine faserverstärkte Platte angeordnet sein, welche die Bauteile mittelbar flächig verbindet.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 ein erfindungsgemäßes Verbundelement mit unterschiedlichen Rührreibschweißwerkzeugen;
Fig. 2 mehrere aneinander angeordnete erfindungsgemäße Verbundelemente;
Fig. 3 ein als Rohr ausgebildetes erfindungsgemäßes Verbundelement;
Fig. 4 ein erfindungsgemäßes Verbundelement mit einem Rührreibschweißwerkzeug mit rotierender Schulter;
Fig. 5 ein erfindungsgemäßes Verbundelement mit einem Rührreibschweißwerkzeug mit stehender Schulter.

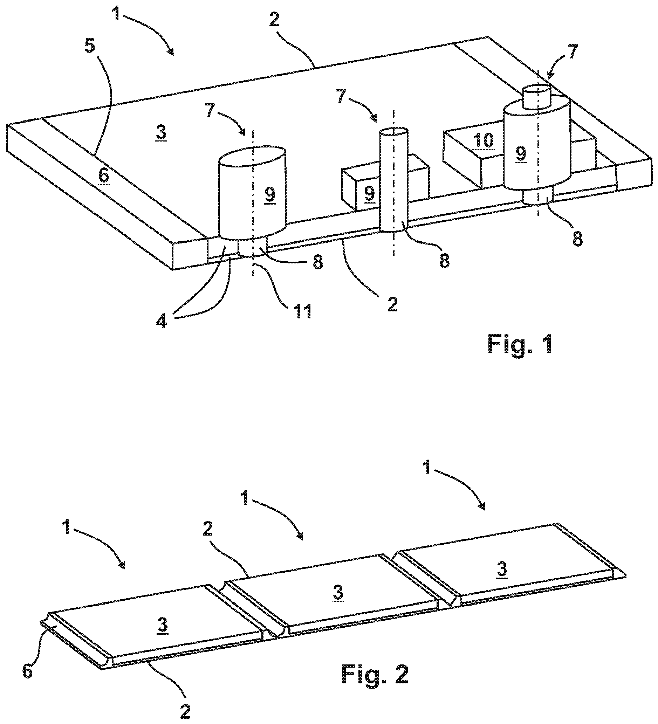

Fig. 1 zeigt eine Anordnung von flächigen Bauteilen 2 samt einem Verbindungsteil 6 mit unterschiedlichen Rührreibschweißwerkzeugen 7 zur Durchführung eines erfindungsgemäßen Verfahrens. Die Rührreibschweißwerkzeuge 7 sind wie dargestellt an fluchtenden Seitenflächen 4 der flächigen Bauteile 2 angeordnet, um die flächigen Bauteile 2 zu einem Verbundelement 1 zu verbinden. Wie ersichtlich ist dabei eine Achse 11 der Rührreibschweißwerkzeuge 7 jeweils senkrecht auf eine flächige Seite 3 der flächigen Bauteile 2 ausgerichtet und liegt eine Schulter 9 des Rührreibschweißwerkzeuges 7 an einer flächigen Seite 3 des obersten Bauteiles 2 an. Zur Herstellung des Verbundelementes 1 wird ein Rührreibschweißwerkzeug 7 in der dargestellten Orientierung entlang der Seitenfläche 4 in einer Vorschubrichtung 12 verfahren, wobei das Rührreibschweißwerkzeug 7 um die Achse 11 rotiert, sodass die flächigen Bauteile 2 an den Seitenflächen 4 verbunden werden. Endseitig an den Seitenflächen 4 sind fluchtende Endflächen 5 der Bauteile 2 vorgesehen, welche senkrecht zu den flächigen Seiten 3 und den Seitenflächen 4 angeordnet sind und an welchen jeweils ein Verbindungsteil 6 angeordnet ist, welches beide flächigen Bauteile 2 berührt. Das Rührreibschweißwerkzeug 7 wird bis zu den Verbindungsteilen 6 bewegt, sodass das Verbindungsteil 6 über eine Rührreibschweißverbindung mit jedem einzelnen der flächigen Bauteile 2 verbunden wird. Dadurch wird eine gute Verbindung der flächigen Bauteile 2 untereinander erreicht. Darüber hinaus ist eine Verbindung mehrerer solcherart hergestellter Verbundelemente 1 mit einem konventionellen Schweißverfahren über die endseitigen Verbindungsteile 6 möglich.

Die drei in Fig. 1 dargestellten Rührreibschweißwerkzeuge 7 unterscheiden sich in Bezug auf eine Verbindung der Schulter 9 mit dem Pin 8 des Rührreibschweißwerkzeuges 7. So ist bei dem links in Fig. 1 dargestellten Werkzeug die Schulter 9 starr mit dem Pin 8 verbunden und rotiert somit mit dem Pin 8 mit. Bei dem mittig abgebildeten Werkzeug ist die Schulter 9 vom Pin 8 getrennt und rotiert bei Bildung einer Schweißnaht nicht. Allerdings umgibt die Schulter 9 den Pin 8, sodass beim Schweißen verdrängtes plastifiziertes Material unter der Schulter 9 eingefangen und an einem Ende der Schweißnaht zum Füllen eines Endlochs verwendet werden kann. Das rechts in Fig. 1 dargestellte Werkzeug weist eine mit dem Pin 8 verbundene, mitrotierende Schulter 9 und eine außerhalb der Schulter 9 angeordnete Außenschulter 10 auf, welche nicht mitrotiert. Dies ermöglicht eine vorteilhafte Geometrie eines Spaltes mit geringer Spaltbreite zwischen der Außenschulter 10 bzw. dem stehenden Teil und der Schulter 9 bzw. den drehenden Teilen des Werkzeuges.

Fig. 2 zeigt drei in einem erfindungsgemäßen Verfahren gebildete Verbundelemente 1, wobei die endseitigen Verbindungsteile 6 jeweils eine Nahtvorbereitung zum Schmelzschweißen aufweisen. Dadurch können als Bimetallbleche ausgebildete erfindungsgemäße Verbundelemente 1 auf einfache Weise in einem herkömmlichen Schmelzschweißverfahren verbunden werden, beispielsweise auf einer Baustelle.

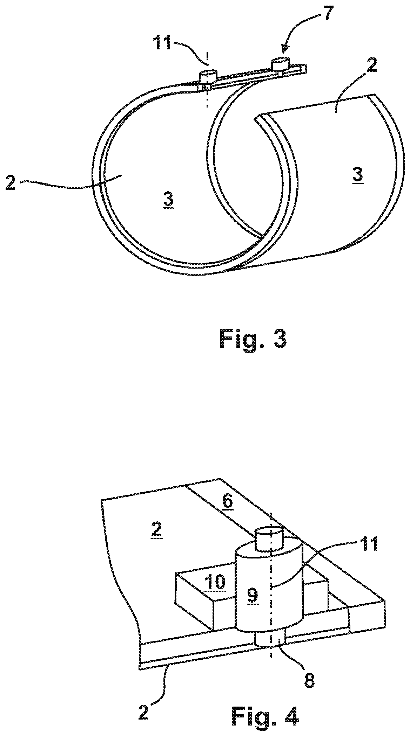

Fig. 3 zeigt ein erfindungsgemäßes Verbundelement 1, welches als Bimetallrohr ausgebildet ist. Das dargestellte Bimetallrohr weist ein innenliegendes, aus einem korrosionsbeständigen Edelstahl bestehendes flächiges Bauteil 2 und ein außenseitiges flächiges Bauteil 2 auf, welches als Strukturbaustahl ausgebildet ist. Das aus Edelstahl bestehende Innenrohr ist mit dem aus Baustahl bestehenden Außenrohr über eine Rührreibschweißverbindung verbunden. Wie dargestellt kann die Rührreibschweißverbindung entlang einer Längsrichtung vorgesehen sein, wenn das Bimetallrohr beispielsweise in einem U-O-Verfahren gebildet wird.

Alternativ kann das Bimetallrohr auch über eine Längsnaht oder über eine Spiralnaht bzw. durch ineinander geschobene Rohre gebildet werden, welche an einer Stirnseite verbunden werden. An einer Stirnseite kann eine Rührreibschweißverbindung zum einen unmittelbar hergestellt werden, wobei eine Schulter 9 des Rührreibschweißwerkzeuges 7 üblicherweise an der Stirnseite anliegt. Zum anderen kann die Rührreibschweißverbindung zwischen den flächigen Bauteilen 2 an der stirnseitigen Seitenfläche 4 der flächigen Bauteile 2 auch über ein Verbindungsteil 6 mittelbar hergestellt werden, wobei das Verbindungsteil 6 normalerweise aus einem Edelstahl besteht. Dadurch können einzelne hergestellte Rohre in einem herkömmlichen Schmelzschweißverfahren an den Verbindungsteilen 6 verbunden werden.

Fig. 4 zeigt ein Rührreibschweißwerkzeug 7 an zu verbindenden flächigen Bauteilen 2 im Detail, welches als Rührreibschweißwerkzeug 7 mit rotierender Schulter 9 und stehender Außenschulter 10 ausgebildet ist. Dadurch wird eine vorteilhafte Oberfläche des Verbundelementes 1 erreicht.

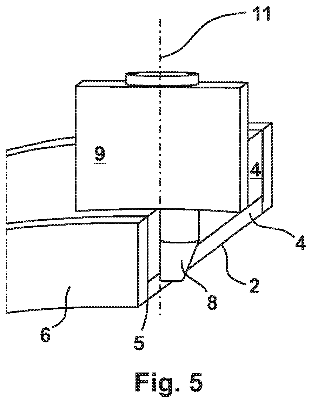

Fig. 5 zeigt ebenfalls ein Rührreibschweißwerkzeug 7 an zu verbindenden flächigen Bauteilen 2, wobei allerdings das Rührreibschweißwerkzeug 7 eine stehende Schulter 9 aufweist. Der rotierende Pin 8 weist somit eine Relativgeschwindigkeit zur Schulter 9 auf.

Verglichen mit dem in Fig. 4 dargestellten Rührreibschweißwerkzeuges 7 wird hierbei eine kürzere Umfangslänge eines Spaltes zwischen der drehenden Schulter 9 und dem rotierenden Pin 8 erreicht.

Mit einem erfindungsgemäßen Verfahren können Metalle unterschiedlichster Eigenschaften auf einfache und robuste Weise verbunden werden. Beispielsweise sind Schwarz-Weiß-Verbindungen aus Baustahl und Edelstahl auf kostengünstige Weise herstellbar. Ein erfindungsgemäßes Verbundelement 1 kann insbesondere als Bimetallrohr ausgebildet sein, um hohe Korrosionsbeständigkeit und Festigkeit bei gleichzeitig geringen Herstellungskosten zu erreichen. So sind erfindungsgemäß hergestellte Verbundelemente 1 wesentlich kostengünstiger herstellbar als Bauelemente des Standes der Technik mit entsprechenden Eigenschaften, da Bauelemente des Standes der Technik beispielsweise über eine gesamte Wandstärke aus dem korrosionsbeständigen Edelstahl ausgebildet sind.

## Patentansprüche

1. Verfahren zum Verbinden flächiger Bauteile (2) aus Metallen unterschiedlicher Eigenschaften, wobei die Bauteile (2) flächig aneinander positioniert werden, wobei die Bauteile (2) über eine flächige Seite (3) aneinander positioniert werden, welche relativ zu den weiteren Seitenflächen (4) eine größte Ausdehnung bzw. eine maximale Oberfläche aufweist, wobei Seitenflächen (4) der Bauteile (2) zumindest teilweise fluchtend angeordnet werden, wonach die Bauteile (2) an zumindest einem Teil der fluchtenden Seitenflächen (4) mittels Rührreibschweißen verbunden werden, **dadurch gekennzeichnet, dass** ein Verbindungsteil (6) an fluchtenden Endflächen (5) der flächigen Bauteile (2) angeordnet wird, wonach das Verbindungsteil (6) mittels Rührreibschweißen mit den Bauteilen (2) verbunden wird, wobei ein Verbundelement (1) aus Metallen unterschiedlicher Eigenschaften gebildet wird, welches endseitig ein aus einem homogenen Material bestehendes Verbindungsteil (6) aufweist, wonach mehrere gebildete Verbundelemente (1) an den Verbindungsteilen (6) verschweißt werden.

2. Verfahren nach Anspruch 1, **dadurch gekennzeichnet, dass** die Verbundelemente mit einem Schmelzschweißverfahren verschweißt werden.

3. Verfahren nach Anspruch 1 oder 2, **dadurch gekennzeichnet, dass** Bauteile (2) eingesetzt werden, welche zumindest teilweise aus Strukturbaustahl, korrosionsfestem Stahl, rostfreiem Edelstahl, Bor-haltigem Stahl, Tantal, Aluminium, Kupfer oder Titan bestehen.

4. Verfahren nach einem der Ansprüche 1 bis 3, **dadurch gekennzeichnet, dass** ein längsnahtgeschweißtes oder spiralgeschweißtes Rohr hergestellt wird.

5. Verfahren nach einem der Ansprüche 1 bis 4, **dadurch gekennzeichnet, dass** längsnahtgeschweißte Rohre oder spiralgeschweißte Rohre verbunden werden.

6. Verfahren nach einem der Ansprüche 1 bis 5, **dadurch gekennzeichnet, dass** eine Schulter (9) eines eingesetzten Rührreibschweißwerkzeuges (7) beim Rührreibschweißen an einem obersten Bauteil (2) anliegt, wobei bevorzugt die Schulter (9) eine von einem Pin (8) des Rührreibschweißwerkzeuges (7) unterschiedliche Rotationsgeschwindigkeit aufweist.

7. Verfahren nach einem der Ansprüche 1 bis 6, **dadurch gekennzeichnet, dass** eine Schulter (9) des Rührreibschweißwerkzeuges (7) von einer Außenschulter (10) umgeben ist, welche eine von einer Rotationsgeschwindigkeit des Pins (8) abweichende Geschwindigkeit um die Achse (11) aufweist.

8. Verfahren nach einem der Ansprüche 1 bis 7, **dadurch gekennzeichnet, dass** rohrförmige Bauteile (2) eingesetzt werden, wobei bevorzugt vorgesehen ist, dass die Bauteile (2) über eine Übermaßpassung verbunden werden, wobei insbesondere ein inneres Bauteil (2) abgekühlt und/oder ein äußeres Bauteil (2) erhitzt werden, bevor die Bauteile (2) flächig aneinander positioniert werden.

9. Verfahren nach Anspruch 8, **dadurch gekennzeichnet, dass** eine Rührreibschweißverbindung mit einer in einem innenliegenden, rohrförmigen Bauteil (2) angeordneten Einrichtung, insbesondere mit einem Rohrkrabbler, hergestellt wird.

10. Verfahren nach einem der Ansprüche 1 bis 9, **dadurch gekennzeichnet, dass** zwischen den Bauteilen (2) eine Fasermatte angeordnet wird.

11. Verfahren nach einem der Ansprüche 1 bis 10, **dadurch gekennzeichnet, dass** drei Bauteile (2) verbunden werden, wobei insbesondere ein erstes Bauteil (2) aus rostfreiem Edelstahl, ein flächig mit dem ersten Bauteil (2) verbundenes zweites Bauteil (2) aus Bor-haltigem Stahl und ein flächig mit dem zweiten Bauteil (2) verbundenes drittes Bauteil (2) aus Baustahl hergestellt ist.

12. Verbundelement (1), aufweisend zumindest zwei flächige Bauteile (2) aus Metallen unterschiedlicher Eigenschaften, wobei die Bauteile (2) über eine flächige Seite (3) aneinander positioniert sind, wobei die Bauteile (2) über eine Seitenfläche (4) aneinander positioniert sind, welche relativ zu den weiteren Seitenflächen (4) eine größte Ausdehnung bzw. eine maximale Oberfläche aufweist, wobei Seitenflächen (4) der Bauteile (2) zumindest teilweise fluchtend angeordnet sind, wobei die Bauteile (2) an zumindest einem Teil der fluchtenden Seitenflächen (4) mittels Rührreibschweißen verbunden sind, **dadurch gekennzeichnet, dass** ein Verbindungsteil (6) an fluchtenden Endflächen (5) der flächigen Bauteile (2) angeordnet ist, das mittels Rührreibschweißen mit den Bauteilen (2) verbunden ist, wobei ein Verbundelement (1) aus Metallen unterschiedlicher Eigenschaften gebildet ist, welches endseitig ein aus einem homogenen Material bestehendes Verbindungsteil (6) aufweist.

13. Verbundelement (1) nach Anspruch 12, **dadurch gekennzeichnet, dass** das Verbundelement (1) als Rohr zum versprödungsarmen Transport radioaktiver Medien ausgebildet ist, welches insbesondere für ein Kernkraftwerk geeignet ist.

14. Verbundelement (1) nach Anspruch 12, **dadurch gekennzeichnet, dass** das Verbundelement (1) als Münze oder Medaille ausgebildet ist.

15. Verbundelement (1) nach einem der Ansprüche 12 bis 14, **dadurch gekennzeichnet, dass** zwischen den Bauteilen (2) eine Fasermatte oder eine faserverstärkte Platte angeordnet ist, welche die Bauteile (2) mittelbar flächig verbindet.

## Claims

1. Method for joining flat components (2) made of metals with different properties, wherein the components (2) are flatly positioned against one another, wherein the components (2) are positioned against one another across a flat side (3), which has a greatest extension or a maximum surface relative to the further lateral surfaces (4), wherein lateral surfaces (4) of the components (2) are at least partially aligned, according to which the components (2) are joined to at least one part of the aligning lateral surfaces (4) by means of friction-stir welding, **characterized in that** a connecting part (6) is arranged on aligning end surfaces (5) of the flat components (2), according to which the connecting part (6) is joined to the components (2) by means of friction-stir welding, wherein a composite element (1) made of metals with different properties is formed, which comprises a connecting part (6) on the end side consisting of a homogeneous material, according to which a plurality of formed composite elements (1) are welded to the connecting parts (6).

2. Method according to Claim 1, **characterized in that** the composite elements are welded using a fusion welding process.

3. Method according to Claim 1 or 2, **characterized in that** components (2) are used that are at least partially made of structural steel, corrosion-resistant steel, stainless steel, boron-containing steel, tantalum, aluminium, copper or titanium.

4. Method according to any one of Claims 1 to 3, **characterized in that** a longitudinally welded or spiral-welded pipe is produced.

5. Method according to any one of Claims 1 to 4, **characterized in that** longitudinally welded pipes or spiral-welded pipes are joined.

6. Method according to any one of Claims 1 to 5, **characterized in that** a shoulder (9) of a friction-stir welding tool (7) used during friction-stir welding is attached to a top component (2), wherein, preferably, the shoulder (9) has a different rotation speed from one pin (8) of the friction-stir welding tool (7).

7. Method according to any one of Claims 1 to 6, **characterized in that** a shoulder (9) of the friction-stir welding tool (7) is surrounded by an outer shoulder (10), which has a speed deviating from a rotational speed of the pin (8) around the axis (11).

8. Method according to any one of Claims 1 to 7, **characterized in that** tubular components (2) are used, wherein it is preferably provided that the components (2) are joined via an oversize fit, wherein, in particular, an internal component (2) is cooled and/or an external component (2) is heated before the components (2) are flatly positioned against one another.

9. Method of Claim 8, **characterized in that** a friction-stir welded connection with a device arranged in an internal, tubular component (2), in particular, with a tubular crawler, is produced.

10. Method according to any one of Claims 1 to 9, **characterized in that** a fibre mat is arranged between the components (2).

11. Method according to any one of Claims 1 to 10, **characterized in that** three components (2) are joined, wherein, in particular, a first component (2) is made of stainless steel, a second component (2) joined to the first component (2) in a flat manner is made of boron-containing steel, and a third component (2) joined to the second component (2) in a flat manner is made of structural steel.

12. Composite element (1), comprising at least two flat components (2) made of metals with different properties, wherein the components (2) are positioned against one another across a flat side (3), wherein the components (2) are positioned against one another across a lateral surface (4), which has a greatest extension or a maximum surface relative to the other lateral surfaces (4), wherein lateral surfaces (4) of the components (2) are at least partially aligned, wherein the components (2) are joined to at least one part of the aligning lateral surfaces (4) by means of friction-stir welding, **characterized in that** a connecting part (6) is arranged on aligning end surfaces (5) of the flat components (2), which is joined to the components (2) by means of friction-stir welding, wherein a composite element (1) made metals with different properties is formed, which has a connecting part consisting of a homogeneous material (6) on the end side.

13. Composite element (1) according to Claim 12, **characterized in that** the composite element (1) is formed as a pipe for the low-embrittlement transport of radioactive media, which is particularly suitable for a nuclear power plant.

14. Composite element (1) according to Claim 12, **characterized in that** the composite element (1) is formed as a coin or medal.

15. Composite element (1) according to any one of Claims 12 to 14, **characterized in that** a fibre mat or a fibre-reinforced plate is arranged between the components (2), which joins the components (2) indirectly in a flat manner.

## Revendications

1. Procédé, destiné à assembler des éléments structurels (2) plans, constitués de métaux présentant différentes propriétés, lors duquel l'on positionne les éléments structurels (2) à plat les uns contre les autres, les éléments structurels (2) étant positionnés les uns contre les autres par l'intermédiaire d'une face (3) plane, qui par rapport aux autres faces latérales (4) présente une extension supérieure ou une surface maximale, lors duquel l'on place des faces latérales (4) des éléments structurels (2) en alignement au moins partiel, suite à quoi l'on assemble les éléments structurels (2) sur au moins une partie des faces latérales (4) alignées par soudage par friction à mouvement cyclique, **caractérisé en ce que** l'on place une pièce d'assemblage (6) sur des faces d'extrémité (5) alignées des éléments structurels (2) plans, suite à quoi, l'on assemble la pièce d'assemblage (6) par soudage par friction à mouvement cyclique avec les éléments structurels (2), un élément composite (1) en métaux présentant différentes propriétés étant créé, qui sur le côté d'extrémité comporte une pièce d'assemblage (6) en une matière homogène, suite à quoi, l'on soude plusieurs élément composites (1) créés sur les pièces d'assemblage (6).

2. Procédé selon la revendication 1, **caractérisé en ce que** l'on soude les éléments composites par procédé de soudage par fusion.

3. Procédé selon la revendication 1 ou 2, **caractérisé en ce que** l'on met en œuvre des éléments structurels (2) qui sont constitués au moins partiellement en acier de construction structuré, en acier résistant à la corrosion, en acier inoxydable, en acier contenant du bore, en tantale, en aluminium, en cuivre ou en titane.

4. Procédé selon l'une quelconque des revendications 1 à 3, **caractérisé en ce que** l'on fabrique un tube à soudure longitudinale ou à soudure hélicoïdale.

5. Procédé selon l'une quelconque des revendications 1 à 4, **caractérisé en ce que** l'on assemble des tubes à soudure longitudinale ou à soudure hélicoïdale.

6. Procédé selon l'une quelconque des revendications 1 à 5, **caractérisé en ce que** lors du soudage par friction à mouvement cyclique, un épaulement (9) d'un outil (7) de soudage par friction à mouvement cyclique mis en œuvre est adjacent à un élément structurel (2) le plus haut, de préférence, l'épaulement (9) présentant une vitesse de rotation différente de celle d'une broche (8) de l'outil (7) de soudage par friction à mouvement cyclique.

7. Procédé selon l'une quelconque des revendications 1 à 6, **caractérisé en ce qu'**un épaulement (9) de l'outil (7) de soudage par friction à mouvement cyclique est entouré d'un épaulement extérieur (10) qui présente une vitesse autour de l'axe (11) qui est divergente d'une vitesse de rotation de la broche (8).

8. Procédé selon l'une quelconque des revendications 1 à 7, caractérisé en ce l'on met en œuvre des éléments structurels (2), étant prévu de préférence que l'on assemble les éléments structurels (2) par interférence, notamment un élément structurel (2) intérieur étant refroidi et/ou un élément structurel (2) extérieur étant chauffé, avant que l'on ne positionne à plat les uns sur les autres les éléments structurels (2).

9. Procédé selon la revendication 8, **caractérisé en ce que** l'on créé un assemblage par soudage par friction à mouvement cyclique à l'aide d'un système placé dans un élément structurel (2) tubulaire interne, notamment à l'aide d'un robot d'inspection de tuyaux.

10. Procédé selon l'une quelconque des revendications 1 à 9, **caractérisé en ce que** l'on place une natte de fibres entre les éléments structurels (2).

11. Procédé selon l'une quelconque des revendications 1 à 10, **caractérisé en ce que** l'on assemble trois éléments structurels (2), notamment un premier élément structurel (2) étant fabriqué en acier inoxydable, un deuxième élément structurel (2) assemblé à plat avec le premier élément structurel (2) étant fabriqué en acier contenant du bore, et un troisième élément structurel (2) assemblé à plat avec le deuxième élément structurel (2) étant fabriqué en acier de construction.

12. Elément composite (1), comportant au moins deux éléments structurels (2) plans constitués de métaux présentant différentes propriétés, les éléments structurels (2) étant positionnés les uns contre les autres par un côté (3) plan, les éléments structurels (2) étant positionnés les uns contre les autres par l'intermédiaire d'une face latérale (4) qui par rapport aux autres faces latérales (4) présente une extension supérieure ou une surface maximale,, les faces latérales (4) des éléments structurels (2) étant placées en alignement au moins partiel, les éléments structurels (2) étant assemblés sur au moins une partie des faces latérales (4) alignées par soudage par friction à mouvement cyclique, **caractérisé en ce qu'**une pièce d'assemblage (6) est placée sur des faces d'extrémité (5) alignées des éléments structurels (2) plans, qui est assemblée avec les éléments structurels (2) par soudage par friction à mouvement cyclique, un élément composite (1) en métaux présentant différentes propriétés étant créé, qui sur le côté d'extrémité comporte une pièce d'assemblage (6) en une matière homogène.

13. Elément composite (1) selon la revendication 12, **caractérisé en ce que** l'élément composite (1) est conçu sous la forme d'un tube, destiné au transport peu fragile de fluide radioactif, qui est adapté notamment à une centrale nucléaire.

14. Elément composite (1) selon la revendication 12, **caractérisé en ce que** l'élément composite (1) est conçu sous la forme d'une pièce de monnaie ou d'une médaille.

15. Elément composite (1) selon l'une quelconque des revendications 12 à 14, **caractérisé en ce qu'**entre les éléments structurels (2) est placée une natte en fibres ou un panneau renforcé par fibres, qui assemble indirectement les éléments structurels (2) à plat.
